# FASCICULE DE BREVET EUROPEEN

(11) **EP 3 576 585 B1**
(45) Date de publication et mention de la délivrance du brevet: **21.12.2022**
(21) Numéro de dépôt: 18705710.4
(22) Date de dépôt: 02.02.2018
(51) Int. Cl.: A47J 27/08, A47J 27/62

(54) **CUISEUR ÉQUIPÉ DE MOYENS DE MESURE DU GONFLEMENT DE L'ALIMENT**
KOCHER MIT MITTELN ZUM MESSEN DER QUELLUNG EINES NAHRUNGSMITTELS
COOKER PROVIDED WITH MEANS FOR MEASURING SWELLING OF A FOOD PRODUCT

(30) Priorité: 03.02.2017 FR 1750954
(43) Date de publication de la demande: 11.12.2019
(73) Titulaire: SEB S.A., 69130 Ecully (FR)
(72) Inventeur: GOYON, Annabelle, 21120 Marcilly-Sur-Tille (FR); VOLATIER, Sébastien, 21000 Dijon (FR)
(74) Mandataire: SEB Développement
(86) Numéro de dépôt international: PCT/FR2018/050268
(87) Numéro de publication internationale: WO 2018/142086

(56) Documents cités:
- WO-A1-2012/056173
- WO-A2-2012/018965
- US-A- 6 028 297

## Description

La présente invention les appareils de petit électroménager permettant de cuire des céréales et légumineuses, en particulier du riz, encore appelés « cuiseurs ».

On connaît de nombreux modèles de cuiseurs.

La publication WO 2012/056173 A1 décrit un exemple de cuiseur à riz.

Le brevet US 6 028 297 divulgue un cuiseur de riz capable de réduire la puissance de chauffage lors de détection d'un débordement de porridge de riz (« *rice gruel* ») dans l'enceinte, du fait de la mousse que produit le riz en cuisant. Le cuiseur comporte un flotteur dans le couvercle susceptible d'être déplacé lors du débordement.

La demande WO 2012/018965 divulgue un dispositif comportant un contenant principal et des contenants d'entrée et de sortie de liquide pour alimenter le contenant principal et recevoir des déchets provenant de celui-ci.

Il existe plusieurs types de riz, par exemple riz blanc, riz brun, riz noir ou riz rouge, et chaque type de riz se décline en plusieurs variétés.

La majorité des cuiseurs comportent des programmes de cuisson adaptés aux différents types de riz, notamment riz blanc ou riz brun. Certains cuiseurs à riz présentent des programmes spécialisés pour la cuisson d'une variété de riz en particulier, comme celles du Nord-Est de la Chine, Basmati ou Thaï.

Il existe aussi des cuiseurs à riz dont l'interface permet au consommateur de sélectionner le format du grain de riz introduit dans la cuve avant cuisson, à savoir long ou rond.

La cinétique de cuisson optimale pour une variété de riz dépend du comportement de celle-ci à la cuisson. Ce dernier se traduit en particulier par la rapidité de gonflement du grain de riz suite à la gélatinisation de l'amidon, en fonction du potentiel de gonflement de ladite variété. Le gonflement est fonction au moins en partie de trois paramètres principaux que sont la température de gélatinisation de la variété, le format du grain de riz et la teneur en amylose du grain de riz.

Il existe un besoin pour perfectionner encore les cuiseurs afin notamment d'adapter au mieux le cycle hydro-thermique aux propriétés organoleptiques recherchées.

Par ailleurs, en ce qui concerne plus particulièrement les cuiseurs à riz, le riz est introduit dans l'enceinte de cuisson avec une quantité d'eau minimale, qu'il est important de respecter sauf à cuire le riz dans des conditions inadaptées, pouvant allant jusqu'à le brûler.

Si l'absence totale d'eau dans la cuve peut être détectée rapidement du fait de l'élévation anormale de température lors de la chauffe, un remplissage insuffisant de la cuve en eau n'est pas détecté par les cuiseurs existants et ne permet pas d'éviter de brûler l'aliment ou de détériorer son goût.

Il existe ainsi un intérêt également pour détecter l'introduction d'une quantité insuffisante d'eau.

L'invention vise donc à perfectionner encore les cuiseurs, notamment à riz, afin de répondre à tout ou partie des besoins rappelés ci-dessus.

L'invention a ainsi pour objet, selon un premier de ses aspects, un cuiseur comportant une enceinte de réception d'un aliment en graines, notamment du riz, ayant une propension à gonfler en présence d'eau, ce cuiseur étant caractérisé par le fait qu'il est équipé de moyens de mesure délivrant une information relative au gonflement de l'aliment dans l'enceinte pendant une étape de trempage, notamment une information représentative de la vitesse de gonflement, du taux de gonflement et/ou de la force de gonflement de l'aliment dans l'enceinte.

La mesure peut s'effectuer alors que l'aliment est dans l'enceinte qui servira à sa cuisson, l'enceinte de réception étant alors l'enceinte de cuisson. Cela réduit les manipulations, puisque la mesure s'effectue sur l'aliment destiné à être cuit. On peut aussi disposer ce faisant d'un volume d'aliment pour la mesure plus important, ce qui peut améliorer la précision. En outre, lorsque le gonflement est favorisé par la température, ce qui est le cas de certaines variétés de riz notamment, le fait de mesurer une grandeur représentative du gonflement alors que l'aliment est disposé dans l'enceinte de cuisson permet de bénéficier du système de de chauffe associé à cette dernière pour élever la température lors du trempage.

En variante, la mesure est effectuée sur un échantillon de l'aliment, l'enceinte de réception étant alors une enceinte d'analyse, distincte de l'enceinte de cuisson. Cela oblige à une manipulation supplémentaire, pour placer l'échantillon dans l'enceinte d'analyse puis le retirer, mais peut faciliter par ailleurs la mise en œuvre de la mesure, car l'enceinte d'analyse peut être spécialement adaptée à la mesure à effectuer.

Il peut être avantageux que le cuiseur dispose à la fois d'une enceinte de cuisson et d'une enceinte d'analyse distincte, car cela permet d'une part de mesurer une grandeur représentative du gonflement dans l'enceinte de cuisson, pendant une phase de trempage de l'aliment, et d'autre part de procéder à un autre type de mesure dans l'enceinte d'analyse. L'aliment peut être disposé à sec, sans eau, dans cette enceinte d'analyse, voire être en présence d'un réactif destiné à permettre la mesure d'une propriété particulière.

L'invention peut permettre de déterminer une grandeur représentative du gonflement de l'aliment au sein du cuiseur, sans faire appel à un instrument de mesure extérieur.

La mesure effectuée permet de renseigner l'appareil et/ou l'utilisateur sur certains paramètres de l'aliment et d'adapter le cycle hydro-thermique de cuisson à celui-ci, en vue de maximiser par exemple ses potentiels nutritionnel et/ou sensoriel. La mesure peut être effectuée de façon automatique à chaque cuisson ou être effectuée seulement sur demande de l'utilisateur, par exemple à l'occasion de la première cuisson suivant l'ouverture d'une nouvelle boîte ou sachet de l'aliment.

L'utilisateur peut bénéficier, grâce à la mesure effectuée par le cuiseur, d'un itinéraire de cuisson pour chaque aliment adapté à l'obtention d'une propriété recherchée pour celui-ci, par exemple une texture particulière.

L'invention permet aussi de rendre moins utile une étape d'identification par l'utilisateur de la variété de l'aliment préalablement à son introduction dans l'appareil, puisque l'appareil peut être capable, grâce à la mesure effectuée, de déterminer au moins certains paramètres de celui-ci de lui-même.

L'invention présente également un intérêt lorsque la variété de riz est connue de l'utilisateur et du cuiseur, ayant par exemple été renseignée par celui ou ayant déjà fait l'objet d'une mesure lors d'une cuisson antérieure.

Dans ce cas, la mesure de la force de gonflement, du taux de gonflement et/ou de la vitesse de gonflement peut permettre de savoir si le riz est toujours frais, bon à cuire et a été stocké correctement, ou au contraire a séché et va présenter des défauts de cuisson.

Le cuiseur peut ainsi être agencé pour comparer le résultat de la mesure avec des données de référence pour une variété de riz précédemment utilisée ou connue, notamment signalée comme variété favorite, et en fonction du résultat de la comparaison avertir l'utilisateur sur la mauvaise qualité du riz introduit. L'utilisateur peut ainsi être prévenu que le riz utilisé risque de ne pas procurer les résultats sensoriels ou nutritionnels attendus.

Un autre avantage de l'invention est de permettre de détecter, si on le souhaite, un apport d'eau initial insuffisant. Pour ce faire, on peut utiliser les moyens de mesure pour vérifier que le niveau d'eau initial excède d'une quantité prédéfinie le niveau de l'aliment. Si les moyens de mesure détectent que le niveau d'eau initial attendu n'est pas atteint, cette situation peut être signalée à l'utilisateur par un message d'erreur par exemple, et le démarrage du cycle hydro-thermique peut être empêché.

La détection d'un niveau d'eau supérieur d'une distance prédéfinie au niveau de l'aliment peut être facilitée par l'utilisation d'un élément posé sur l'aliment, qui suit le niveau de l'aliment lors de son gonflement, et qui présente une surface supérieure dépassant du niveau de l'aliment d'une certaine distance. Les moyens de mesure peuvent être agencés pour détecter que cette surface supérieure est bien immergée à l'instant initial, en jouant par exemple sur la réflexion différente de la lumière lorsque la surface supérieure est immergée ou lorsqu'elle ne l'est pas. En cas de niveau d'eau insuffisant, la surface supérieure émerge, ce qui peut être détecté par les moyens de mesure, et un message correspondant peut être généré pour prévenir l'utilisateur du remplissage insuffisant de la cuve en eau.

Les moyens de mesure peuvent encore être utilisés au cours du déroulement du cycle hydro-thermique pour détecter un manque d'eau au cours du trempage, lié à l'absorption d'eau par l'aliment. Dans ce cas, le trempage peut être interrompu et la cuisson lancée. On peut ainsi éviter de prolonger le trempage au risque de voir le niveau d'eau baisser encore. L'invention permet ainsi, si cela est souhaité, d'utiliser les moyens de mesure pour permettre au cuiseur de lancer de façon anticipée et automatique la cuisson en cas de détection d'un niveau d'eau limite au cours du trempage. On réduit alors le risque de cuisson dans des conditions non homogènes, susceptibles de dégrader le goût de l'aliment.

Le terme « cuiseur » englobe ici tous les cuiseurs à riz (« rice-cooker » en anglais), les multi-cuiseurs, les autocuiseurs, les cuiseurs-vapeur et les mijoteurs.

De préférence, le cuiseur dispose d'une régulation automatique de la chauffe, de façon à contrôler la température dans l'enceinte de cuisson. En particulier, le cuiseur peut être agencé pour que la mesure d'une grandeur relative au gonflement de l'aliment soit effectuée alors que la température dans l'enceinte de cuisson est maintenue à une température prédéfinie, de préférence supérieure ou égale à 70°C pour du riz, par exemple égale à 75°C, voire supérieure, pouvant atteindre par exemple 95°C. En effet, la cinétique d'absorption d'eau par le riz est dépendante de la température, et le fait d'effectuer la mesure à une température supérieure ou égale à 70°C, par exemple égale à 75°C, permet de faire apparaître en un temps relativement court des différences significatives pour le taux de gonflement entre certaines variétés de riz, et donc de les discriminer.

L'information précitée délivrée par les moyens de mesure peut être traitée par un système informatique externe au cuiseur, avec lequel celui-ci échange des données. Il s'agit par exemple d'une tablette, d'un appareil téléphonique intelligent, d'un ordinateur dédié à la cuisine, ou d'un serveur distant avec lequel le cuiseur peut échanger des données ; l'accès à ce serveur s'effectue par exemple par le réseau Internet. L'avantage d'un traitement externe au moins partiel des données est de bénéficier de la puissance de calcul d'un système informatique qui n'est pas dédié à cette application. Dans une variante, l'information est traitée par un système informatique interne au cuiseur, celui-ci comportant par exemple un circuit de contrôle à microprocesseur.

Le traitement de l'information peut se faire en accédant à une base de données permettant d'associer une information relative à une force de gonflement, à un taux de gonflement et/ou à une vitesse de gonflement de l'aliment, à une variété de celui-ci ou à une classe présentant sensiblement les mêmes propriétés. Cette base de données peut être interne au cuiseur, étant stockée dans une mémoire de celui-ci, ou externe au cuiseur, étant présente par exemple sur un serveur avec lequel le cuiseur peut communiquer, par exemple par une liaison Internet.

Le cuiseur peut être agencé pour sélectionner ou proposer à l'utilisateur, en fonction de l'information précitée, un cycle hydro-thermique adapté à la variété d'aliment, et le cas échéant, à une propriété recherchée pour l'aliment au terme de la cuisson, concernant par exemple la texture de l'aliment. Le cuiseur est de préférence agencé pour permettre à l'utilisateur de modifier s'il le souhaite certains paramètres du cycle proposé, en fonction par exemple de la texture recherchée. Par exemple, le cuiseur dispose de données qui le renseignent pour chaque variété de riz répertoriée par le cuiseur sur des propriétés, notamment de texture, qu'il est possible d'atteindre en fonction de différents paramètres du cycle hydro-thermique, tels que par exemple la durée de trempage, la durée de cuisson, la température de cuisson, le ratio eau/riz, la gestion de la pression lors de la cuisson, ou la quantité de riz introduite. Le cuiseur ayant déterminé la variété de riz ou la classe à laquelle l'aliment introduit s'apparente, il lui est possible d'ajuster automatiquement des paramètres du cycle hydro-thermique de façon à obtenir des propriétés pour l'aliment qui répondent le mieux à des préférences entrées par l'utilisateur, par exemple concernant la texture du riz, notamment la fermeté, le collant, la brillance, l'adhésivité, l'élasticité, ou la cohésion, entre autres paramètres de texture recherchés.

Le choix d'un cycle hydro-thermique particulier adapté à la variété d'aliment introduite dans le cuiseur permet d'optimiser la qualité de cuisson et de maximiser ses potentiels nutritionnel et sensoriel, et d'obtenir par exemple la texture souhaitée par l'utilisateur.

Le cycle hydro-thermique proposé ou sélectionné par le cuiseur en fonction de la nature de l'aliment est par exemple choisi parmi plusieurs cycle prédéfinis dont les paramètres sont figés ; par exemple, le cuiseur dispose de plusieurs programmes de cuisson à des températures respectives différentes, et l'un des programmes est choisi en fonction de la nature de l'aliment telle que déterminée par analyse. En variante, le cycle-hydro-thermique préprogrammé au sein du cuiseur comporte un ou plusieurs paramètres qui sont des variables, et dont les valeurs sont déterminées à partir au moins de l'information découlant de la mesure en appliquant une ou plusieurs règles de calcul. Cela peut permettre d'ajuster plus finement le cycle hydro-thermique à l'aliment. Par exemple, le cuiseur dispose d'un programme de cuisson à une température T qui est une fonction du taux de gonflement T_{g}, soit T = f(T_{g}), avec f qui est une fonction continue de la variable T_{g} par exemple. En fonction du taux de gonflement mesuré pour l'aliment, la température T est ajustée. Le programme de cuisson peut avantageusement faire intervenir pour chaque variété plusieurs variables que sont la température de trempage, le ratio eau/riz initial et la durée de trempage. La connaissance du comportement au trempage de la variété de riz introduite peut permettre de renseigner le cuiseur sur le modèle prédictif à utiliser pour prédire les propriétés sensorielles du riz au terme de la cuisson. Connaissant le modèle, le cuiseur peut, en fonction des propriétés recherchées par l'utilisateur, par exemple en termes de texture, adapter les différents paramètres du cycle hydro-thermique de façon à adapter au mieux celui-ci à l'obtention de ces propriétés recherchées.

Le cuiseur peut être agencé pour permettre à l'utilisateur de sélectionner au moins un paramètre de texture recherché pour l'aliment, notamment un degré de fermeté et/ou de collant en fin de cuisson, et le cuiseur peut être agencé également pour piloter un système de chauffe de l'enceinte recevant l'aliment au moins en fonction d'une part de ladite information déterminée à l'aide des moyens de mesure et d'autre part du ou des paramètres de texture entrés par l'utilisateur, afin de se rapprocher au terme de la cuisson de la texture souhaitée par l'utilisateur.

Les moyens de mesure peuvent être réalisés sous diverses formes, en fonction par exemple de la précision recherchée et du coût admissible pour les réaliser compte tenu du prix final visé. Les moyens de mesure peuvent reposer sur une mesure optique, acoustique, magnétique, électrique et/ou électromécanique, entre autres possibilités.

Par « taux de gonflement », on désigne une grandeur représentative du gonflement relatif de l'aliment au cours du trempage, c'est-à-dire le volume occupé par l'aliment après gonflement, rapporté au volume de l'aliment avant gonflement.

Par « vitesse de gonflement », on désigne une grandeur représentative de la variation au cours du temps du volume de l'aliment.

Par « force de gonflement » on désigne la force de dilatation exercée par l'aliment lors de son gonflement.

Les moyens de mesure opèrent de préférence seulement lorsque le cuiseur est refermé, c'est-à-dire que le couvercle a été rabattu et enclenché dans sa position de cuisson.

La mesure du taux de gonflement et/ou de la vitesse de gonflement de l'aliment peut s'effectuer directement sur l'aliment, en détectant par exemple une variation de niveau de la surface de l'aliment au cours du trempage.

Dans une variante, la mesure s'effectue de façon indirecte, en déterminant par exemple un volume d'eau absorbé par l'aliment au cours du trempage.

Les moyens de mesure peuvent être disposés à divers emplacements du cuiseur, et sont par exemple déportés au moins partiellement, voire entièrement, dans un couvercle du cuiseur. Dans ce cas, les moyens de mesure peuvent comporter un capteur qui fait face à la surface de l'aliment présent dans l'enceinte. Ce capteur est par exemple solidaire du couvercle du cuiseur. Le capteur est avantageusement protégé, lorsqu'il est optique, par un hublot, par exemple en verre ou en tout autre matériau adapté, par exemple du silicium.

Dans une variante, les moyens de mesure comportent un élément immergé au moins partiellement dans l'aliment au cours du trempage.

Les moyens de mesure optiques peuvent être adaptés à détecter une variation du niveau de la surface de l'aliment, ou préférentiellement d'un élément cible disposé à la surface de l'aliment, qui accompagne le déplacement de la surface de celui-ci lors du gonflement.

Les moyens de mesure optiques peuvent encore être adaptés à détecter une variation du niveau de l'eau de trempage, notamment lorsque la grandeur représentative du gonflement correspond à une quantité d'eau absorbée qui est mesurée. La connaissance du niveau d'eau de trempage peut être utile pour introduire de façon dosée de l'eau permettant de compenser la quantité absorbée par l'aliment.

L'élément cible précité peut agir comme un réflecteur de lumière et faciliter l'action des moyens de détection optiques. Par exemple, l'élément cible présente une meilleure réflectivité que l'aliment lui-même, et ainsi faciliter la réflexion d'un faisceau lumineux, notamment un faisceau collimaté.

L'élément cible est de préférence centré dans l'enceinte de cuisson. A cet effet, l'élément cible peut notamment occuper toute la section intérieure de la cuve de réception de l'aliment.

De préférence, l'élément cible est ajouré, de façon à lui permettre de couler et de se poser sur la surface de l'aliment.

L'élément cible est réalisé de préférence en acier inoxydable.

De préférence, l'élément cible est réalisé avec une partie saillante vers le haut, dont la face supérieure sert de surface cible aux moyens de mesure.

La surface cible est ainsi surélevée par rapport au niveau de l'aliment d'une certaine distance, qui est choisie en fonction du ratio d'eau/riz minimal à respecter.

Cela permet d'utiliser l'élément cible pour vérifier qu'une quantité suffisante d'eau a bien été introduite dans la cuve, en détectant que la face supérieure de l'élément cible est immergée. Si la quantité d'eau introduite dans la cuve est insuffisante, la face supérieure émerge, ce qui peut être aisément détecté, optiquement notamment, et une alarme correspondante peut être générée.

Pour réaliser la partie saillante, on peut utiliser un élément cible mis en forme par emboutissage. L'élément cible peut ainsi comporter une partie centrale emboutie, surélevée, et une partie périphérique de forme annulaire, plane. Cette partie périphérique peut être ajourée, de même que la partie centrale, notamment à sa périphérie. La partie centrale peut être de sommet sensiblement plan, parallèle au plan de la partie annulaire périphérique. Ainsi, l'élément cible comporte de préférence une partie centrale surélevée, notamment formée par emboutissage d'un disque, de préférence un disque dont le diamètre extérieur correspond sensiblement au diamètre intérieur de la cuve de réception de l'aliment, ce disque étant de préférence perforé.

Lorsque la détection est non optique, par exemple acoustique, magnétique ou capacitive, les moyens de détection peuvent être sensibles à la position occupée par l'élément cible, du fait par exemple du matériau en lequel cet élément est réalisé.

Dans un exemple de réalisation, les moyens de mesure comportent un capteur optique, par exemple un capteur infrarouge, notamment dans le proche infrarouge, de façon à être moins sensible au niveau de l'eau de trempage et/ou au verre d'un hublot de protection du capteur, par exemple.

Les moyens de mesure optiques opèrent par exemple par triangulation, et comportent une source lumineuse, de préférence infrarouge, qui projette un faisceau collimaté sur la surface, et un capteur sensible à l'orientation du faisceau réfléchi.

Dans une variante de réalisation, les moyens de mesure comportent un capteur magnétique, par exemple un capteur à effet Hall ou un capteur inductif, ou un capteur capacitif.

Dans ce cas notamment, les moyens de détection peuvent comporter un palpeur dirigé vers l'aliment, et qui prend par exemple appui sur la surface de celui-ci.

Ce palpeur est mobile relativement à un détecteur qui est pourvu d'un circuit de détection de la position du palpeur relativement au détecteur ; par exemple, le palpeur comporte une tige qui s'engage plus ou moins dans le détecteur et la détection de la position de la tige s'effectue au sein du détecteur par exemple par voie capacitive ou inductive.

De préférence, le palpeur est réalisé avec à son extrémité une tête qui lui permet de reposer sur l'aliment sans s'enfoncer outre mesure dans celui-ci. Cette tête peut être constituée par un flasque orienté perpendiculairement à la tige.

De préférence, le palpeur est amovible, c'est-à-dire qu'il peut être désengagé du détecteur, de façon à faciliter son nettoyage.

Les moyens de mesure peuvent encore comporter un détecteur qui est immergé dans l'aliment contenu dans l'enceinte de réception, en particulier lorsque celle-ci est constituée par l'enceinte de cuisson. Ce détecteur repose par exemple par une extrémité dans le fond de l'enceinte de réception de l'aliment, et il est agencé pour détecter le niveau de l'aliment dans l'enceinte, par exemple grâce à un capteur optique ou électrique ou à un élément mobile qui suit l'évolution du niveau de la surface de l'aliment, cet élément mobile étant par exemple de forme annulaire engagé sur le détecteur. Le détecteur peut comporter au moins deux électrodes effectuant une mesure de conductivité, mieux une pluralité d'électrodes réparties le long du détecteur de façon à détecter sur quelle distance celui-ci est immergé dans l'eau et/ou l'aliment.

Le détecteur, notamment lorsqu'il est disposé dans l'enceinte avec l'aliment, peut être agencé pour transmettre ses informations par une liaison sans fil à un récepteur intégré au cuiseur ou extérieur à celui-ci.

Le détecteur peut se fixer, le cas échéant, de façon amovible dans ou sur l'enceinte de réception, par exemple sur le fond de celle-ci. Cela peut permettre de le maintenir avec une orientation prédéfinie dans l'enceinte, par exemple verticale, et améliorer la précision de la mesure. Par exemple, le détecteur comporte un aimant qui contribue à l'immobiliser dans l'enceinte de cuisson pendant la phase de trempage au moins.

Dans une variante, le détecteur s'étend depuis le fond de la cuve, de préférence verticalement, de façon non amovible.

Le cuiseur peut disposer d'une interface homme machine comportant un afficheur qui permet d'afficher au moins une information liée à la mesure effectuée d'une grandeur représentative de la force de gonflement, du taux de gonflement et/ou de la vitesse de gonflement.

L'interface peut afficher des paramètres d'un cycle hydro-thermique proposé à l'utilisateur, en fonction notamment de la variété identifiée, et le cas échéant, de préférences entrées par l'utilisateur, par exemple concernant la texture souhaitée.

L'interface peut être agencée pour permettre à l'utilisateur d'activer ou non les moyens de mesure et/ou d'entrer des préférences concernant le résultat recherché en fin de cuisson, par exemple de texture.

L'interface peut également être utilisée pour enregistrer une variété en tant que favorite, afin de mémoriser des données correspondantes, et par exemple les réutiliser lors d'une nouvelle cuisson de cette variété, par exemple dans le but de retrouver une même texture.

L'interface peut également être agencée pour permettre de contrôler le fonctionnement du cuiseur et d'ajuster par exemple certains paramètres du cycle hydro-thermique.

L'invention a encore pour objet un procédé de mesure d'une grandeur représentative de la force de gonflement, du taux de gonflement et/ou de la vitesse de gonflement d'un aliment présent dans une enceinte d'un cuiseur, dans lequel on détecte pendant une étape de trempage de l'aliment dans cette enceinte, une force de gonflement et/ou une variation du niveau de l'aliment et/ou de l'eau de trempage dans l'enceinte et l'on détermine une information représentative dudit taux ou de ladite vitesse sur la base au moins de la variation ainsi détectée.

Dans un exemple de mise en œuvre, la variation du niveau de l'aliment pendant la phase de trempage est utilisée pour déterminer la variété de l'aliment ou une classe de variétés similaires en termes de gonflement au trempage.

Dans une variante, la mesure du niveau de l'eau de trempage est utilisée pour déterminer la variété de l'aliment ou une variété similaire en termes de gonflement au trempage, en mesurant par ailleurs une quantité d'eau introduite dans l'enceinte contenant l'aliment pendant le trempage, cette introduction s'effectuant de façon contrôlée et dosée en fonction d'une détection d'une variation du niveau de l'eau de trempage.

Comme mentionné plus haut, l'information précitée peut être traitée au moins en partie par un système informatique externe au cuiseur, avec lequel celui-ci échange des données.

La mesure peut être répétée alors que l'aliment est présent dans le cuiseur, notamment de façon à disposer d'une cinétique de gonflement. La connaissance de la cinétique de gonflement peut procurer des données supplémentaires pour discriminer plus finement des variétés entre elles.

L'aliment peut être le riz et dans ce cas notamment le trempage est de préférence effectué à une température supérieure ou égale à 70°C, par exemple égale à 75°C.Une fois les mesures effectuées, un message correspondant peut être délivré à l'utilisateur.

Le cuiseur peut être réalisé de telle sorte que l'utilisateur puisse entrer grâce à l'interface utilisateur précitée au moins un paramètre de texture recherché, par exemple relatif à la fermeté ou au collant souhaité, et déterminer de façon automatique les réglages à effectuer connaissant la variété de riz et le ratio eau/ riz initial pour obtenir le résultat recherché, en s'aidant pour cela de modèles prédictifs des propriétés sensorielles atteignables pour chaque variété en fonction de la température de trempage, de la durée de trempage et du ratio eau/riz initial, par exemple.

Les mesures effectuées peuvent servir uniquement à discriminer plusieurs variétés entre elles, en fonction d'adapter la cuisson au mieux, comme expliqué ci-dessus. Les mesures effectuées peuvent encore être suivies par la génération de données additionnelles destinées à informer l'utilisateur sur des propriétés de l'aliment, par exemple au moins une propriété physico-chimique de celui-ci, par exemple le taux d'amylose, la teneur en protéines, la température de gélatinisation et/ou une caractéristique géométrique des grains de l'aliment, par exemple la forme ou une dimension, ces données étant déterminées sur la base de ladite information, voire le cas échéant par des mesures additionnelles résultant par exemple de la présence d'un autre appareil de mesure au sein du cuiseur. Ces données additionnelles sont si on le souhaite communiquées à l'utilisateur, par exemple en étant affichées sur l'interface homme machine du cuiseur, ou affichées sur un terminal communiquant par une liaison sans fil avec le cuiseur. L'invention a encore pour objet, selon un autre de ses aspects, un procédé de cuisson d'un aliment à l'aide d'un cuiseur selon l'invention, tel que défini ci-dessus, dans lequel un programme de cuisson de l'aliment est déterminé et/ou proposé à l'utilisateur et/ou rendu sélectionnable par l'utilisateur en fonction au moins de ladite information représentative de la force de gonflement, de la vitesse de gonflement et/ou du taux de gonflement de l'aliment, notamment par comparaison de cette information à des données de référence. Cette comparaison permet le cas échéant de déterminer également au moins une propriété physico-chimique de l'aliment, notamment le taux d'amylose, la teneur en protéines et/ou la température de gélatinisation.

Dans un tel procédé de cuisson, l'utilisateur peut être invité à entrer au moins une valeur d'un paramètre de texture souhaité en fin de cuisson, et le programme de cuisson peut être déterminé au moins en fonction d'une part de la valeur souhaitée et d'autre part de ladite information représentative de la force de gonflement, de la vitesse de gonflement et/ou du taux de gonflement de l'aliment.

L'utilisateur peut être invité à entrer au moins une préférence en termes de pouvoir nutritionnel et/ou de durée du programme de cuisson et le programme de cuisson peut être déterminé au moins en fonction d'une part de la valeur souhaitée et d'autre part de ladite information représentative de la force de gonflement, de la vitesse de gonflement et/ou du taux de gonflement de l'aliment.

L'invention a encore pour objet un procédé pour identifier un aliment présent dans un cuiseur, notamment un cuiseur tel que défini ci-dessus, dans lequel pendant une première phase d'identification, on observe la force de gonflement, le taux de gonflement et/ou la vitesse de gonflement lors du trempage à une température T comprise entre 70 et 77°C et l'on compare cette force de gonflement, ce taux de gonflement et/ou cette cinétique de gonflement à des données de référence, pour générer sur la base au moins de cette comparaison une indication relative à l'identité de l'aliment, notamment la variété de riz ou l'appartenance à une classe d'aliments présentant des propriétés similaires en termes de gonflement au cours du trempage.

Ce procédé peut comporter une deuxième phase d'identification après modification de température de trempage, notamment entre 85° et 95°C.

En effet, certaines variétés de riz ne présentent pas de gonflement sensible avant qu'une température de trempage prédéfinie ne soit atteinte ; le fait d'élever la température de l'eau et de détecter un effet de la température sur le gonflement à partir d'une certaine température seulement, peut permettre de discriminer certaines variétés.

Le procédé peut également comporter l'étape consistant à comparer le résultat de la mesure avec des données de référence concernant un aliment précédemment utilisé et enregistré comme aliment favori dans le cuiseur, et en fonction du résultat de la comparaison avertir l'utilisateur sur la qualité de l'aliment introduit.

L'invention a encore pour objet, selon un autre de ses aspects, indépendamment ou en combinaison avec ce qui précède, un procédé de détection d'un niveau d'eau dans l'enceinte de cuisson d'un cuiseur, notamment à riz, dans lequel on dispose sur l'aliment dans l'enceinte de cuisson un élément cible présentant une partie surélevée définissant une surface cible disposée en regard de moyens de mesure, notamment optiques, l'on génère un signal de mesure relatif à la position de cette surface cible par rapport au niveau de l'eau dans la cuve. Ce signal de mesure peut être utilisé pour déclencher une alarme, interrompre un cycle hydro-thermique ou empêcher son lancement, ou provoquer la fin anticipée d'un cycle de trempage et le déclenchement automatique d'un cycle de cuisson, entre autres possibilités.

En particulier, le procédé de détection peut viser à détecter si la surface cible est émergée ou non. Dans ce cas, la surface cible est de préférence surélevée d'une distance qui correspond sensiblement au niveau d'eau minimal souhaité au-dessus de l'aliment.

L'invention pourra être mieux comprise à la lecture de la description détaillée qui va suivre, d'exemples non limitatifs de mise en œuvre de celle-ci, et à l'examen du dessin annexé, sur lequel :
- les figures 1A à 5A représentent de façon schématique et partielle, en coupe axiale, des exemples de cuiseurs selon l'invention, juste après introduction de l'aliment dans la cuve,
- les figures 1B à 5B représentent respectivement les cuiseurs des figures 1A à 5A après gonflement de l'aliment, lors de la phase de trempage,
- la figure 6 représente une variante de cuiseur selon l'invention,
- la figure 7 est un schéma en blocs d'un exemple de circuit de contrôle d'un cuiseur selon l'invention,
- la figure 8 illustre un exemple de traitement de données fournies par les moyens de mesure,
- la figure 9 illustre l'évolution en fonction du temps de la hauteur du lit de riz pendant le trempage à 75°C, pour différentes variétés de riz,
- la figure 10 est une vue à échelle agrandie du cuiseur des figures 2A et 2B,
- la figure 11 est une demi-coupe axiale du cuiseur de la figure 10,
- la figure 12 représente l'évolution de la force de gonflement en fonction du temps pour différentes variétés de riz lors du trempage à 70°C, et
- la figure 13 représente de façon schématique et partielle un cuiseur équipé de moyens de mesure comportant un texturomètre.

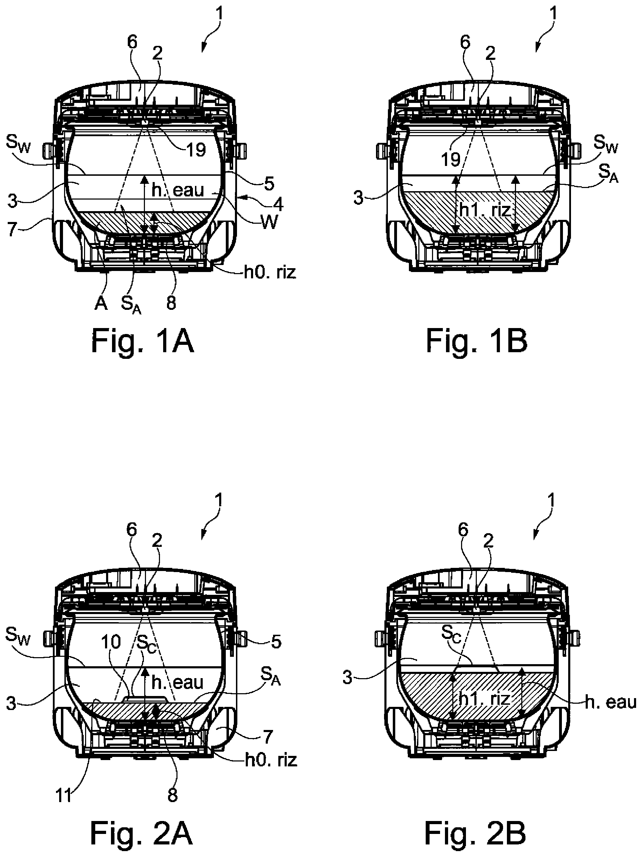

On a représenté à la figure 1A un cuiseur 1 selon l'invention, comportant un boîtier 4 comprenant une partie de base 7 et un couvercle 6 articulé sur cette partie de base 7.

Le boîtier 4 loge au sein de la partie de base 7 une cuve 5 définissant une enceinte de cuisson 3, dans laquelle l'aliment à cuire A, en l'espèce du riz, est introduit avec de l'eau W. On a désigné par la référence Sw la surface de l'eau et par la référence S_{A} la surface de l'aliment A. La cuve 5 est de préférence amovible, pour permettre de la nettoyer. Elle peut être revêtue intérieurement d'un revêtement anti-adhérent.

Le cuiseur 1 comporte, de façon connue en soi, un système électrique 8 pour chauffer la cuve 5, commandé par un circuit de contrôle électronique qui est par exemple intégré au moins partiellement au couvercle 6.

Le système électrique 8 comporte une ou plusieurs résistances électriques chauffantes.

Le cuiseur 1 est prévu pour se raccorder à une prise de courant, à l'aide d'un cordon non représenté.

Après son introduction dans la cuve 5, lors du trempage, qui s'effectue de préférence à une température prédéfinie, l'aliment A tend à absorber de l'eau et gonfler, ce gonflement étant plus ou moins important en fonction des variétés de l'aliment et pouvant également dépendre de la température. Le gonflement peut s'accompagner, au sein de l'aliment, de réactions chimiques telles qu'une hydratation ou une gélatinisation.

On a illustré à la figure 1B la variation du niveau de la surface S_{A} de l'aliment A suite à son gonflement, par rapport au niveau initial représenté à la figure 1A.

La cuve 5 est remplie à l'instant t₀ avec l'aliment A sur une hauteur initiale *h0.riz* et la hauteur initiale d'eau vaut *h.eau,* étant supérieure à la hauteur initiale *h0.riz.*

De préférence, la hauteur initiale d'eau *h.eau* est choisie de telle sorte que la hauteur de l'eau reste supérieure ou égale à celle de l'aliment à la fin de l'étape de trempage.

Après gonflement, à l'instant t₁, la hauteur de l'aliment A est devenue *h1.riz.*

Conformément à un aspect de l'invention, le cuiseur 1 est équipé de moyens de mesure délivrant une information représentative de la force de gonflement, du taux de gonflement et/ou la vitesse de gonflement de l'aliment A dans l'enceinte 3, pendant l'étape de trempage.

Dans l'exemple des figures 1A et 1B, ces moyens de mesure comportent un capteur optique 2 qui est porté par le couvercle 6 et qui détecte à distance une variation du niveau de l'aliment A dans la cuve 5.

Le capteur optique 2 est orienté de façon à faire face au fond de la cuve 5, étant de préférence situé sensiblement au centre de la face intérieure du couvercle 6. Il peut être protégé des projections de liquide par un hublot transparent 19, en verre ou en silicium.

On a représenté de façon très schématique un faisceau lumineux émis par le capteur optique 2 sur les figures 1A et 1B sous la forme d'un faisceau divergent, sans respecter la véritable géométrie de ce faisceau, car elle peut être très variable selon les technologies employées. En particulier, le faisceau émis peut être un faisceau collimaté. La longueur d'onde de ce faisceau est choisie pour être compatible avec la présence d'eau au-dessus de l'aliment A et avec la traversée éventuelle du hublot de protection. De préférence, la longueur d'onde est dans l'infrarouge, mieux dans le proche infrarouge.

Le capteur optique 2 peut être un capteur optique agissant par triangulation, comportant un émetteur d'un faisceau de lumière avec un angle par rapport à la normale de la surface cible, et un détecteur pour déterminer l'angle du faisceau réfléchi par réflexion spéculaire. La distance du capteur à la surface cible est donnée par la connaissance de cet angle.

Le faisceau de lumière émis par le capteur optique 2 peut être un faisceau de lumière infrarouge, et l'émetteur peut être une DEL infrarouge, mieux une diode laser.

Le capteur optique 2 peut encore être à mesure confocale par codage chromatique.

Dans ce cas, un système optique crée au sein du capteur 2 une aberration chromatique contrôlée qui éclate une lumière blanche en un continuum de longueurs d'ondes monochromatiques dans le sens de la longueur de l'axe optique. Ces différentes longueurs d'onde sont focalisées à des distances différentes. Le capteur comporte un détecteur qui reconnaît la longueur d'onde qui se focalise exactement sur la surface cible et qui correspond à une distance bien précise.

Les moyens de mesure peuvent être sans élément mobile. En variante, les moyens de mesure comportent un élément mobile, par exemple afin de déplacer une optique dans le but de focaliser un faisceau sur la surface de l'aliment, la détection d'une variation de niveau de l'aliment s'effectuant d'après le déplacement nécessaire à la re-focalisation.

Dans l'exemple des figures 1A et 1B, le capteur optique 2 permet de détecter la variation du niveau de la surface S_{A} de l'aliment au cours du trempage.

Par exemple, une mesure initiale du niveau de la surface S_{A} est effectuée à un instant t₀ après fermeture du couvercle 6 et lancement par l'utilisateur d'un programme de cuisson de l'aliment, ce programme comportant une phase de trempage. Au moins une autre mesure est effectuée à un instant t₁, après une durée prédéfinie.

Le taux de gonflement T_{g}(t₁) à l'instant t₁ peut être déterminé par le calcul de la quantité (h_{1.riz} - h_{0.riz})/h_{0.riz}.

Il peut être avantageux d'effectuer une succession de mesures du niveau de la surface de l'aliment A au cours du temps lors de l'étape de trempage, de façon à connaître l'évolution de la vitesse de gonflement de l'aliment A au cours du temps et l'historique de l'absorption d'eau par l'aliment, car plusieurs variétés de l'aliment A peuvent avoir des cinétiques de gonflement différentes, comme détaillé plus loin en prenant l'exemple du riz. La connaissance de la cinétique de gonflement de la variété introduite dans l'enceinte de cuisson peut permettre de reconnaître plus facilement une variété, en comparant la cinétique observée avec des cinétiques de référence précédemment mesurées pour des variétés connues.

De préférence, de façon à faciliter la mesure du gonflement de l'aliment A, le cuiseur 1 comporte un élément cible qui est placé à la surface de l'aliment A dans la cuve 5, de façon à suivre le niveau de la surface de l'élément quand l'aliment A gonfle.

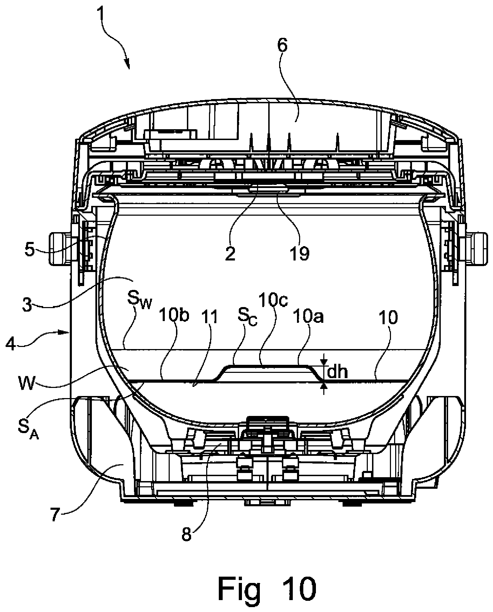

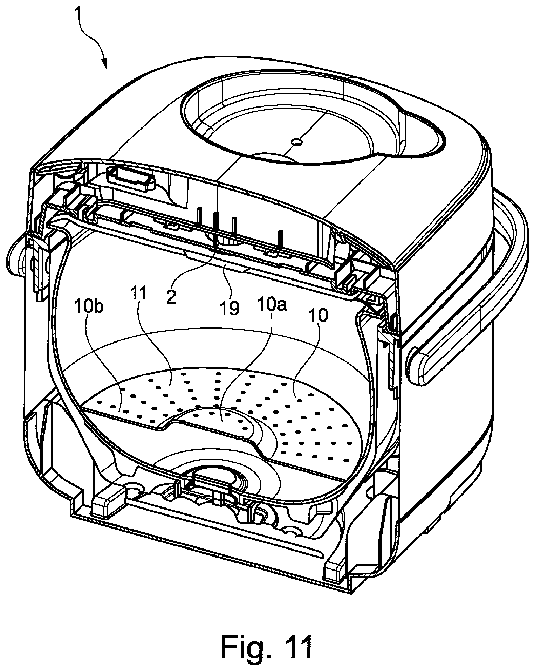

On a représenté aux figures 2A, 10 et 11 un cuiseur 1 comportant un tel élément 10, servant de cible pour le capteur optique 2.

L'élément 10 présente une densité qui lui évite de flotter dans l'eau contenue dans la cuve 5, et qui l'amène à reposer contre la surface S_{A} de l'aliment, comme illustré sur les figures 2A et 2B notamment.

L'élément 10 peut se présenter sous la forme d'un disque comportant une partie centrale surélevée 10a et une partie périphérique annulaire 10b. Cette dernière est de préférence perforée, comme illustré, ce qui lui permet de couler et de reposer sur la surface de l'aliment.

Le sommet 10c de la partie centrale surélevée peut être plan, comme illustré.

La surface supérieure 10c de l'élément 10 sert de surface réfléchissante Sc au capteur optique 2, et présente par exemple une réflectivité élevée, de façon à faciliter la réflexion spéculaire mise en œuvre dans le cas d'une mesure par triangulation par exemple.

L'élément 10 est prévu pour un contact alimentaire et pour supporter la température de trempage et de cuisson. De préférence, il est réalisé en métal, notamment par emboutissage, par exemple en acier inoxydable. L'étendue de la face inférieure 11 de l'élément 10 au contact de l'aliment est suffisante pour lui permettre de rester à la surface de l'aliment sans s'enfoncer durant la phase de trempage.

De préférence, l'élément 10 occupe sensiblement toute la section intérieure de la cuve 5, ce qui permet à la surface cible Sc d'être centrée et de moyenner la mesure sur toute la surface de l'aliment A.

La différence de hauteur dh entre la face supérieure de la partie centrale surélevée et la face inférieure de la partie annulaire périphérique 10b correspond de préférence à la hauteur d'eau minimale souhaitée au-dessus du niveau de l'aliment.

Ainsi, si l'on détecte que la surface Sc émerge, une alarme peut être générée.

Il est avantageux d'effectuer cette détection avant de débuter le trempage, pour signaler à l'utilisateur un manque d'eau dans la cuve.

Il est également intéressant d'effectuer cette détection au cours du trempage.

En effet, à la fin du trempage, il est préférable que l'élément 10 reste immergé, ce qui traduit la présence d'une quantité d'eau suffisante pour débuter le cycle de cuisson.

Si l'on détecte au cours du trempage un niveau d'eau inférieur à celui de la surface cible Sc, c'est-à-dire si l'on détecte que la surface cible Sc sort de l'eau, alors il est possible de déclencher automatiquement le début de la cuisson de façon anticipée pour ne pas prolonger le trempage et éviter d'arriver autrement en début de cuisson avec un niveau d'eau encore plus faible, donc susceptible de conduire à une dégradation de l'aliment au cours de la cuisson.

En variante, en cas de détection du niveau d'eau insuffisant au cours du trempage, le cycle hydro-thermique est interrompu. La détection de l'émergence de la surface cible Sc peut se faire en détectant la variation de la réflectivité liée à l'absence d'eau ou non recouvrant la partie centrale surélevée 10a.

Une grandeur représentative du taux de gonflement de l'aliment A à un instant t est déterminée par la mesure du déplacement de l'élément 10 à cet instant au cours du trempage. Il en est de même pour l'acquisition de la vitesse de gonflement.

Le cuiseur 1 peut être réalisé de telle sorte qu'à la fermeture du couvercle 6 il cherche à détecter automatiquement la présence de l'élément 10, et signale le cas échéant à l'utilisateur un niveau d'eau insuffisant, comme expliqué ci-dessus, avant que le programme de cuisson ne puisse être sélectionné, voire être lancé.

La surface cible Sc de l'élément 10 est normalement immergée dans l'eau, y compris en fin de trempage, de façon à permettre d'alerter en cas de niveau d'eau insuffisant, comme expliqué plus haut. En variante, l'élément 10 est réalisé avec une hauteur suffisante pour lui permettre de rester émergé au cours de la phase de trempage, ce qui peut limiter les perturbations liées à la réfraction à l'interface entre l'eau et l'air.

Le cas échéant, l'élément 10 est réalisé de façon à coopérer mécaniquement autrement avec la cuve 5 pour rester centré dans celle-ci, par exemple en prenant appui contre elle en plusieurs emplacements équi-répartis angulairement. Par exemple, l'élément 10 est réalisé avec une forme étoilée.

Dans les exemples des figures 1A et 2A, le suivi du gonflement de l'aliment A s'effectue de façon directe, par une mesure du niveau de la surface S_{A} de celui-ci ou d'une surface cible Sc d'un élément posé sur l'aliment A et se déplaçant avec lui.

Il est encore possible de déterminer une grandeur représentative du gonflement de l'aliment de manière indirecte, en mesurant une grandeur autre que le niveau de la surface S_{A} ou Sc. En particulier, le cuiseur 1 peut être agencé pour mesurer la quantité d'eau absorbée par l'aliment au cours de la phase de trempage, et qui provoque son gonflement. Le taux de gonflement est ainsi lié à la quantité d'eau absorbée, et il en est de même pour la vitesse de gonflement.

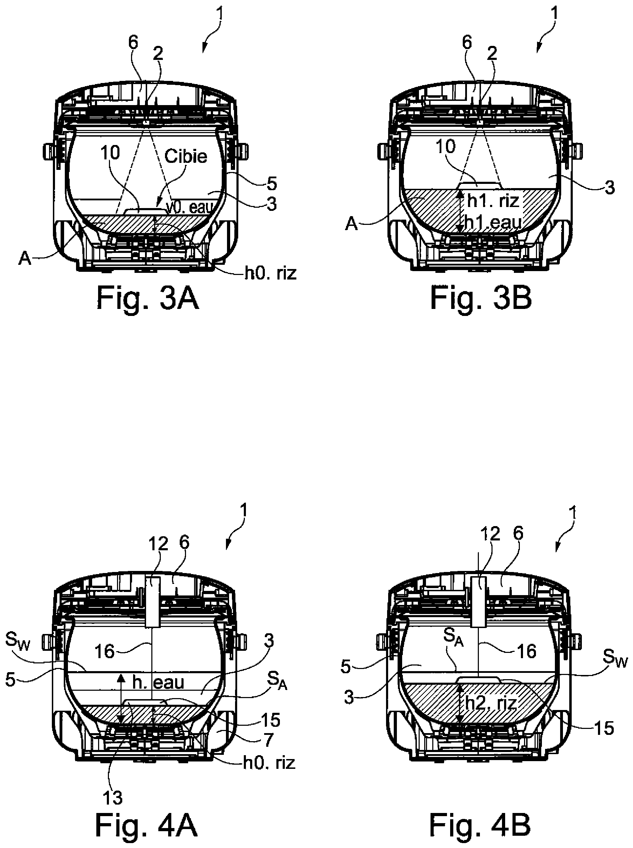

Dans l'exemple illustré à la figure 3A, un volume d'eau initial *V0.eau* est ajouté dans l'enceinte de cuisson 3 au début de l'étape de trempage à t₀ de telle sorte que la hauteur initiale de l'eau soit égale à la hauteur initiale *h0.riz* de l'aliment A.

Ensuite, de l'eau est rajoutée au fur et à mesure de l'étape de trempage, pour compenser la quantité absorbée, et conserver un niveau d'eau égal à celui de l'aliment A.

A la fin de l'étape de trempage, la quantité d'eau ajoutée est représentative de la variété de l'aliment.

Dans cet exemple, le cuiseur 1 est réalisé de façon à pouvoir ajouter de l'eau dans la cuve 5 à partir d'une réserve d'eau non représentée.

Cette réserve est par exemple disposée dans le couvercle 6 et l'eau s'écoule de façon dosée dans la cuve 5, par exemple en traversant un débitmètre, l'écoulement de l'eau étant commandé de façon automatique par exemple par une électrovanne.

En variante, la réserve d'eau est logée dans la partie de base 7 du boîtier 4, et le cuiseur 1 comporte une pompe doseuse pour amener une quantité dosée d'eau dans la cuve 5, par exemple une pompe péristaltique.

On peut réaliser l'introduction dosée de l'eau en utilisant un élément 10 placé sur l'aliment A, comme illustré sur les figures 3A et 3B. On peut par exemple détecter le moment où l'élément 10 émerge de l'eau, grâce à une mesure optique. Par exemple, les moyens de mesure projettent sur l'élément 10 un faisceau focalisé, qui se réfléchit sur un détecteur en l'absence d'eau. La présence d'eau recouvrant l'élément 10 modifie la réflexion du faisceau, en raison de la réfraction liée à l'eau, et le détecteur peut détecter cette variation dans la lumière réfléchie liée à la présence ou non d'eau recouvrant l'élément 10.

Les moyens de mesure peuvent être agencés pour détecter le moment où le niveau d'eau dans la cuve 5 dépasse celui de l'élément 10, et le cuiseur 1 peut comporter une boucle de contrôle qui déclenche et arrête le remplissage de façon à maintenir le niveau d'eau à affleurement de la surface cible Sc de l'élément 10 au cours du temps.

La connaissance de la quantité d'eau ajoutée au cours du temps renseigne sur la vitesse de gonflement.

La réserve d'eau peut être utilisée, le cas échéant, une fois la variété de l'aliment déterminée, pour ajuster au mieux la quantité d'eau nécessaire à la cuisson.

On va maintenant décrire en référence aux figures 4A et 4B une variante de réalisation du cuiseur 1 dans laquelle les moyens de détection comportent un capteur comportant un palpeur 13 relié mécaniquement à un détecteur 12 porté par le couvercle 6, de telle sorte qu'un déplacement du palpeur 13 soit détecté par le détecteur 12.

Le palpeur 13 comporte par exemple une tête 15 en forme de flasque suffisamment large pour reposer sur la surface de l'aliment A sans s'enfoncer dedans, et une tige 16 qui est engagée dans le détecteur 12.

Lorsque le palpeur 13 se déplace pour accompagner le gonflement de l'aliment A, la tige 16 s'enfonce plus ou moins dans le détecteur 12, et ce dernier peut être agencé pour délivrer un signal représentatif du déplacement de la tige 16 lorsque cette dernière remonte, ce déplacement étant lié au gonflement de l'aliment A.

La détection de la remontée de la tige 16 au sein du détecteur 12 s'effectue par exemple de manière inductive, capacitive ou optique.

Par exemple, la tige 16 porte un aimant et le détecteur 12 comporte un capteur à effet Hall, sensible au champ magnétique produit par cet aimant.

En variante, le détecteur 12 comporte une bobine, par exemple coaxiale à la tige 16, et cette dernière se comporte comme un noyau magnétique introduit plus ou moins dans la bobine selon son axe ; il en résulte une variation de l'inductance de la bobine, qui peut être exploitée pour délivrer un signal représentatif de l'enfoncement de la tige 16 dans le détecteur 12.

En variante encore, le détecteur 12 comporte au moins une électrode générant un champ électrique avec lequel la tige interfère par effet capacitif ; la modification de la capacitance est détectée et convertie en un signal représentatif de l'enfoncement de la tige au sein du détecteur 12.

Le palpeur 13 peut encore déplacer au sein du détecteur 12 un potentiomètre, par exemple linéaire ou rotatif.

Le palpeur peut reposer par son poids contre l'aliment A ; en variante, un ressort de rappel contribue à presser le palpeur contre l'aliment A. Cela peut aider à tasser l'aliment A sous le palpeur et améliorer la précision de la mesure.

Le palpeur 13 peut être relié de façon indémontable au détecteur 12, c'est-à-dire que l'utilisateur ne peut enlever sans utiliser d'outil le palpeur 13 ; de préférence, le palpeur 13 est relié de façon amovible au détecteur 12, c'est-à-dire que l'utilisateur peut l'enlever quand le couvercle 6 est ouvert, par exemple pour le nettoyer.

De préférence, le palpeur 13 est retenu suffisamment sur le détecteur 12 pour que l'utilisateur puisse le mettre en place et refermer le couvercle 6 ensuite sans que le palpeur 13 ne se désengage du détecteur 12 une fois que le couvercle 6 est fermé.

Le cas échéant, la tige 16 peut dépasser le dessus du couvercle 6 en remontant, grâce à une ouverture correspondante ménagée dans celui-ci.

Dans une variante non illustrée, les moyens de mesure comportent un palpeur qui n'est déployé que lorsque le couvercle est fermé. Par exemple, le cuiseur 1 est agencé pour détecter la fermeture du couvercle 6, et actionner alors un mécanisme qui libère un palpeur d'une configuration rétractée à une configuration déployée. Lorsque l'utilisateur souhaite ouvrir le couvercle, le palpeur est ramené en position rétractée avant le déverrouillage d'un verrou autorisant l'ouverture du couvercle.

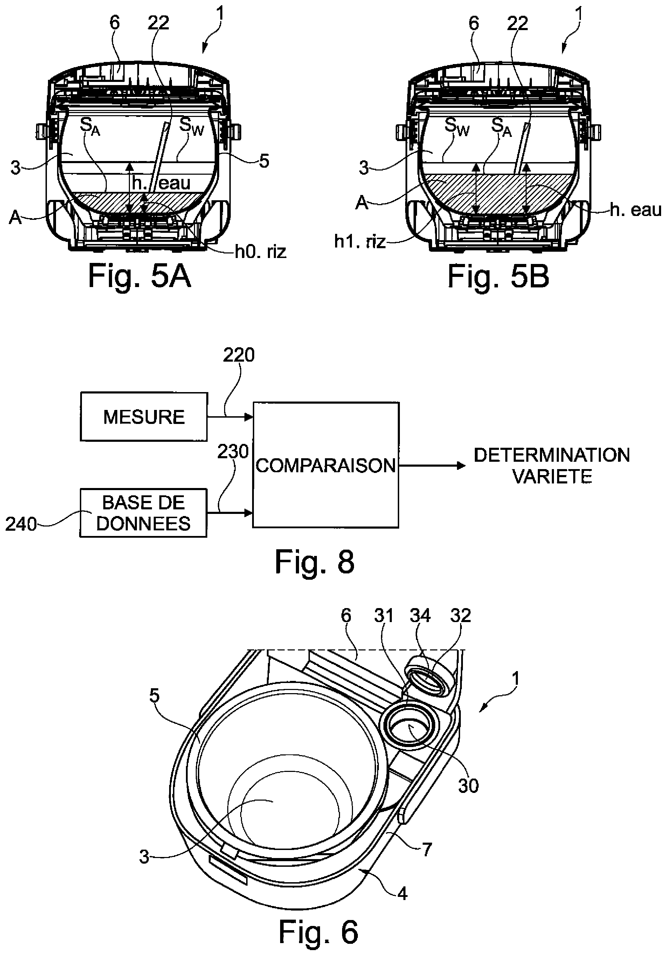

Les moyens de mesure 22 peuvent encore, comme illustré à la figure 5A, être complètement amovibles et disposés dans la cuve 5 lorsque l'aliment A y est présent.

Les moyens de mesure 22 se présentent par exemple sous la forme d'un élément formant détecteur, de forme allongée qui est plongé dans l'aliment, et de préférence orienté verticalement.

Dans ce cas, le résultat de la mesure peut être transmis à un circuit de contrôle du cuiseur par une liaison sans fil, par exemple BLE (« Bluetooth Low Energy ») ou à un terminal situé à proximité, extérieur au cuiseur 1, avec lequel celui-ci communique.

Les moyens de mesure 22 peuvent comporter un capteur optique, capacitif, inductif ou autre, sensible à la hauteur de l'aliment et/ou de l'eau dans laquelle l'aliment trempe.

De préférence, l'élément qui comporte les moyens de mesure 22 vient en appui contre le fond de la cuve 5. Il peut être adapté à détecter un tel appui.

Lorsque l'aliment gonfle, la surface de l'élément qui est au contact de celui-ci augmente, ce qui peut être détecté par les moyens de mesure 22.

Les moyens de mesure 22 peuvent être utilisés pour mesurer directement le gonflement de l'aliment, ou en variante pour réaliser une mesure indirecte du gonflement via la mesure de la quantité d'eau absorbée, comme décrit plus haut en référence aux figures 3A et 3B.

Dans les exemples qui viennent d'être décrits, la mesure de la grandeur représentative du gonflement s'effectue dans l'enceinte de cuisson 3.

Dans la variante illustrée à la figure 6, le cuiseur 1 comporte une enceinte d'analyse 30 distincte de l'enceinte de cuisson 3, dans laquelle est introduite un échantillon de l'aliment A à des fins de mesure d'au moins l'une de ses propriétés, et notamment d'identification.

L'enceinte d'analyse 30 peut notamment être disposée dans la partie de base 7 du boîtier 4 à côté de la cuve 5, et par exemple à proximité d'une charnière par laquelle le couvercle 6 est articulé sur la partie de base 7.

L'enceinte d'analyse 30 est par exemple définie par un pot 31 qui peut être fermé par un bouchon 32 porté par le couvercle 6 lorsque ce dernier est rabattu sur la partie de base 7.

Le volume du pot 31 est inférieur à celui de la cuve 5, et par exemple prévu pour accueillir entre 10 et 20 g d'aliment. De préférence, le pot 31 est reçu tout comme la cuve 5 de manière amovible dans un logement de la partie de base 7, de façon à faciliter son nettoyage et son vidage.

Des moyens de mesure sont par exemple prévus pour mesurer une grandeur représentative de la force de gonflement, du taux de gonflement de l'aliment et/ou de sa vitesse de gonflement en utilisant l'échantillon placé dans le pot 31. Dans ce cas, l'échantillon peut être introduit avec de l'eau de façon à réaliser un trempage, et le pot 31 peut être chauffé à une température accélérant le gonflement de l'aliment A le cas échéant. Ces moyens de mesure peuvent être tels que décrits précédemment en référence aux figures 1A à 5B, et sont par exemple portés par le couvercle 6.

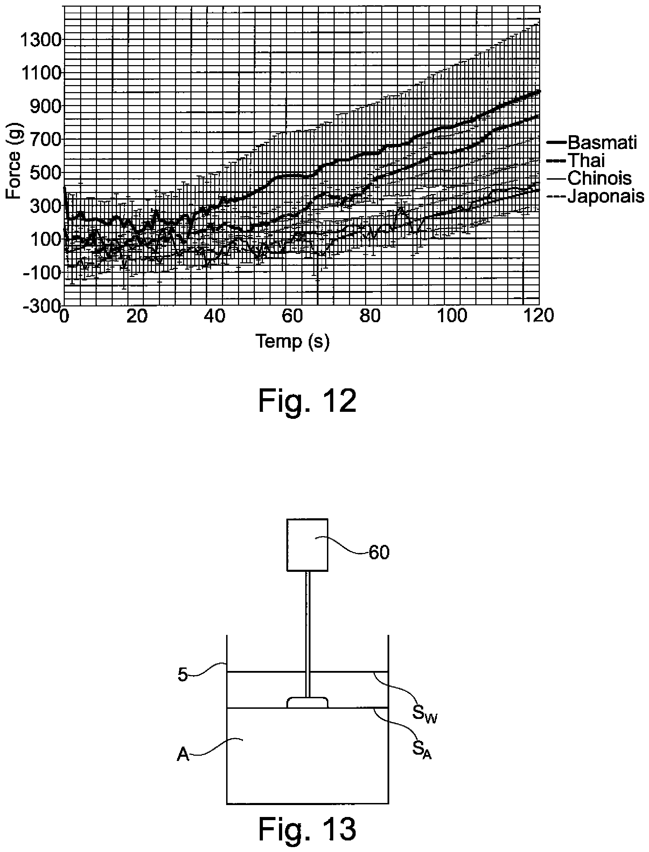

Les moyens de mesure, qu'ils s'adressent à un aliment placé dans la cuve de cuisson ou dans l'enceinte d'analyse annexe, peuvent encore comporter un texturomètre, comme illustré schématiquement à la figure 13.

Ce texturomètre comporte un élément presseur qui appuie sur l'aliment et permet de mesurer la force de gonflement exercée par l'aliment au cours du trempage.

Cette force est différente selon les variétés de riz, comme l'illustre la figure 12, ce qui permet de les différencier.

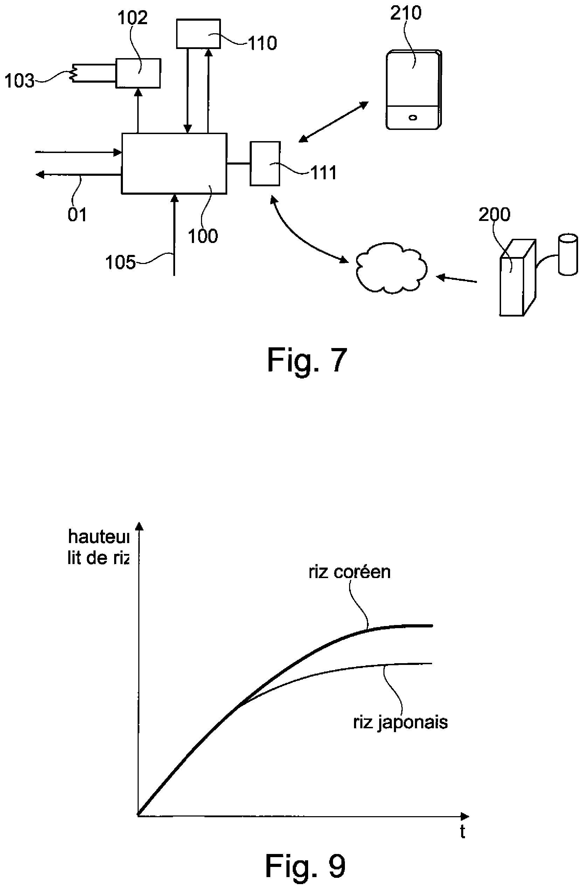

On a représenté à la figure 7 de façon schématique le circuit de contrôle 100 du cuiseur 1. Ce circuit de contrôle 100 communique par exemple par une liaison bidirectionnelle 101 avec les moyens de mesure décrits ci-dessus, permettant de mesurer une grandeur relative au gonflement de l'aliment.

Le circuit de contrôle 100 est par exemple à base de microprocesseur ou de microordinateur.

Une interface de puissance 102 est pilotée par le circuit de contrôle 100 en fonction de la puissance de chauffe devant être fournie par une ou plusieurs résistances électriques 103 du système électrique 8 précité, placé sous la cuve 5.

Le circuit de contrôle 100 peut recevoir des signaux 105 provenant de capteurs de température afin de réguler précisément la température de la cuve 5 autour d'une valeur de consigne, laquelle peut évoluer dans le temps, et notamment au cours de la phase de trempage et de la phase de cuisson.

Le cuiseur 1 comporte une interface homme machine 110 qui est reliée au circuit de contrôle 100 et qui comporte par exemple un afficheur tactile et/ou un ou plusieurs voyants et/ou boutons.

De préférence, le cuiseur 1 est connecté, c'est-à-dire qu'il peut communiquer grâce à une interface adaptée 111 avec un serveur distant 200 via Internet, et/ou avec un terminal 210 tel qu'un téléphone intelligent ou une tablette, par exemple par une liaison Bluetooth ou Wifi.

On a illustré à la figure 8 le traitement des données provenant de la mesure. Sur cette figure les données résultant de la ou des mesures effectuées sur l'aliment A sont référencés 220. Il s'agit par exemple de la mesure d'une grandeur représentative du gonflement de l'aliment A au cours du trempage.

Ces données 220 sont comparées à des données de référence 230 provenant d'une base de données 240.

Par exemple, la base de données 240 répertorie un ensemble de valeurs de variation de force de gonflement du riz pour diverses variétés, comme illustré à la figure 12, ou de la hauteur du lit de riz en fonction du temps à une température de trempage prédéfinie, pour diverses variétés de riz, tel qu'illustré à la figure 9.

Sur cette figure on a représenté l'évolution de la hauteur du lit de riz à 75°C pour les variétés de riz japonais moyen et coréen moyen, des constatations similaires pouvant être effectuées pour d'autres variétés.

Le riz coréen ne présente pas une cinétique de gonflement identique à celle du riz japonais, alors qu'ils ont des températures de pic de gélatinisation proches, ce qui permet de les différencier lors du trempage.

Par ailleurs, si lors du trempage à 75°C le gonflement du riz est faible voire inexistant, on peut en conclure que sa température de pic de gélatinisation est supérieure à 75°C. Dans ce cas, une seconde analyse de comportement à une température plus élevée, par exemple à 95°C, peut permettre de caractériser plus finement la variété.

La teneur en amylose initiale du grain a un effet défavorisant sur l'absorption d'eau par le grain. L'étude du gonflement du riz au cours du temps, pour différentes températures, notamment à 75°C et à 95°C, peut renseigner sur la teneur en amylose de la variété présente dans le cuiseur 1. On comprend qu'en comparant l'historique d'évolution du gonflement de l'aliment A contenu dans le cuiseur 1 avec ces courbes de référence, on peut déterminer de quelle variété l'aliment A est la plus proche, et ainsi identifier la variété de l'aliment de façon automatique.

Le traitement des données 220 peut s'effectuer de façon totalement interne au cuiseur 1, la base de données 240 étant intégrée à celui-ci.

En variante, l'analyse des données 220 se fait au moins partiellement à l'extérieur du cuiseur 1, par exemple au sein du terminal 210, après avoir téléchargé une application correspondante, ou au sein du serveur distant 200. Cela peut permettre de bénéficier d'une puissance de calcul plus importante, le cas échéant.

Une fois la variété de l'aliment A identifiée, ou la classe d'aliments dont le comportement est similaire, ainsi le cas échéant que d'autres propriétés de celui-ci, l'utilisateur peut se voir proposer un ou plusieurs programmes de cuisson, conduisant par exemple à des textures différentes, à des apports nutritionnels différents ou optimisant la durée du cycle hydro-thermique, ces programmes étant adaptés à la variété présente dans le cuiseur 1.

Le cuiseur 1 peut ainsi comporter dans une mémoire des paramètres permettant de générer plusieurs cycles hydro-thermiques en fonction de plusieurs variétés de l'aliment et/ou de propriétés recherchées, notamment gustatives et/ou nutritionnelles. L'interface 110 peut afficher diverses informations permettant à l'utilisateur de sélectionner une ou plusieurs propriétés recherchées en fin de cuisson. Le circuit de contrôle 100 commande alors le cycle hydro-thermique le plus adapté à l'obtention des propriétés recherchées, par exemple grâce à des modèles prédisant l'évolution d'au moins une propriété de l'aliment en fonction de la variété de celui-ci et d'un ou plusieurs paramètres du cycle hydro-thermique, par exemple la durée de trempage, le ratio eau/riz initial, la durée de cuisson, et l'évolution de la température au cours du trempage et/ou de la cuisson.

Le cuiseur peut comporter ou avoir accès à des modèles de cycle hydro-thermique fonction de la nature du riz, de sa forme, des propriétés gustatives et/ou de valeur nutritionnelle souhaitées.

Le cuiseur peut optimiser certains paramètres en fonction du résultat recherché par l'utilisateur, par exemple la teneur glycémique ou la durée du cycle hydro-thermique.

Bien entendu, l'invention peut s'appliquer à d'autres aliments que le riz.

## Revendications

1. Cuiseur (1) comportant une enceinte de réception (3) d'un aliment (A) en graines, notamment de riz, ayant une propension à gonfler en présence d'eau, **caractérisé par le fait qu'**il est équipé de moyens de mesure délivrant une information relative au gonflement de l'aliment dans l'enceinte pendant une étape de trempage par absorption d'eau, notamment représentative de la vitesse de gonflement, du taux de gonflement ou de la force de gonflement de l'aliment dans l'enceinte.

2. Cuiseur selon la revendication 1, étant agencé pour détecter un apport d'eau initial insuffisant, les moyens de mesure étant adaptés à vérifier que le niveau d'eau initial excède d'une distance prédéfinie le niveau de l'aliment.

3. Cuiseur selon la revendication 2, comportant un élément (10) à poser sur l'aliment pour faciliter la détection d'un niveau d'eau supérieur d'une distance prédéfinie au niveau de l'aliment, cet élément (10) suivant le niveau de l'aliment lors de son gonflement, et présentant une surface supérieure dépassant du niveau de l'aliment, les moyens de mesure étant agencés pour détecter le caractère immergé ou non de cette surface supérieure, en particulier à l'instant initial, notamment en jouant sur la réflexion différente de la lumière lorsque la surface supérieure est immergée et lorsqu'elle ne l'est pas.

4. Cuiseur selon l'une quelconque des revendications précédentes, le cuiseur étant agencé pour que la mesure d'une grandeur représentative du gonflement de l'aliment soit effectuée alors que la température dans l'enceinte est maintenue à une température prédéfinie, de préférence supérieure ou égale à 70°C pour du riz, par exemple égale à 75°C, voire supérieure, pouvant atteindre notamment 95°C.

5. Cuiseur selon l'une quelconque des revendications précédentes, étant agencé pour sélectionner ou proposer à l'utilisateur, en fonction de ladite information, un cycle hydro-thermique adapté à la variété d'aliment.

6. Cuiseur selon l'une quelconque des revendications 1 à 5, étant agencé pour permettre à l'utilisateur de sélectionner au moins un paramètre de texture recherché pour l'aliment, notamment un degré de fermeté et/ou de collant en fin de cuisson, et le cuiseur étant agencé également pour piloter un système de chauffe de l'enceinte recevant l'aliment au moins en fonction d'une part de ladite information déterminée à l'aide des moyens de mesure et d'autre part du ou des paramètres de texture entrés par l'utilisateur, afin de se rapprocher au terme de la cuisson de la texture souhaitée par l'utilisateur.

7. Cuiseur selon l'une quelconque des revendications précédentes, les moyens de mesure reposant sur une mesure optique, acoustique, magnétique, électrique et/ou électromécanique.

8. Cuiseur selon l'une quelconque des revendications précédentes, les moyens de mesure étant configurés pour effectuer la mesure du taux de gonflement ou de la vitesse de gonflement de l'aliment directement sur celui-ci, en détectant une variation de niveau de la surface de l'aliment au cours du trempage.

9. Cuiseur selon l'une quelconque des revendications 1 à 8, étant configuré pour effectuer la mesure du taux de gonflement ou de la vitesse de gonflement de l'aliment en déterminant un volume d'eau absorbé par l'aliment au cours du trempage.

10. Cuiseur selon l'une quelconque des revendications précédentes, les moyens de mesure comportant un texturomètre (60).

11. Cuiseur selon l'une quelconque des revendications précédentes, disposant d'une interface homme machine (110) comportant un afficheur qui permet d'afficher au moins une information liée à la mesure effectuée d'une grandeur représentative du taux de gonflement, notamment la variété de riz, et de préférence des paramètres d'un cycle hydro-thermique proposé à l'utilisateur, en fonction notamment de la variété identifiée, et le cas échéant, de préférences entrées par l'utilisateur, notamment concernant la texture souhaitée.

12. Procédé de mesure d'une grandeur représentative de la force de gonflement, du taux de gonflement ou de la vitesse de gonflement d'un aliment présent dans une enceinte d'un cuiseur par absorption d'eau, dans lequel on détecte pendant une étape de trempage de l'aliment dans cette enceinte, une force de gonflement ou une variation du niveau de l'aliment ou de l'eau de trempage dans l'enceinte et l'on détermine une information représentative dudit taux ou de ladite vitesse sur la base au moins de la variation ainsi détectée.

13. Procédé selon la revendication 12, dans lequel l'on détermine au moins sur la base de ladite information une propriété physico-chimique de l'aliment, notamment le taux d'amylose, la teneur en protéines, la température de gélatinisation et/ou une caractéristique géométrique des grains de l'aliment, notamment la forme et les dimensions.

14. Procédé de cuisson d'un aliment à l'aide d'un cuiseur selon l'une quelconque des revendications 1 à 11, dans lequel un programme de cuisson de l'aliment est déterminé et/ou proposé à l'utilisateur et/ou rendu sélectionnable par l'utilisateur en fonction au moins de ladite information représentative de la force de gonflement, de la vitesse de gonflement et/ou du taux de gonflement de l'aliment, notamment par comparaison de cette information à des données de référence permettant de déterminer au moins une propriété physico-chimique de l'aliment, notamment le taux d'amylose, la teneur en protéines et/ou la température de gélatinisation.

## Patentansprüche

1. Kocher (1), umfassend einen Aufnahmebehälter (3) für ein Nahrungsmittel (A) in Samenform, insbesondere Reis, das eine Neigung zum Quellen beim Vorhandensein von Wasser aufweist, **gekennzeichnet durch** die Tatsache, dass er mit Messmitteln ausgestattet ist, die eine Information bezüglich der Quellung des Nahrungsmittels im Behälter während eines Einweichschritts durch Wasseraufnahme liefern, die insbesondere für die Quellgeschwindigkeit, die Quellrate oder die Quellkraft des Nahrungsmittels im Behälter repräsentativ ist.

2. Kocher nach Anspruch 1, der eingerichtet ist, um eine unzureichende anfängliche Wasserzufuhr zu erfassen, wobei die Messmittel angepasst sind, um zu überprüfen, dass der anfängliche Wasserspiegel den Nahrungsmittelspiegel um einen vordefinierten Abstand übersteigt.

3. Kocher nach Anspruch 2, umfassend ein auf das Nahrungsmittel abzulegendes Element (10), um die Erfassung eines um einen vordefinierten Abstand höheren Wasserspiegels als der Nahrungsmittelspiegel zu erleichtern, wobei dieses Element (10) dem Spiegel des Nahrungsmittels bei dessen Quellung folgt und eine obere Oberfläche aufweist, die den Nahrungsmittelspiegel überragt, wobei die Messmittel eingerichtet sind, um das eingetauchte oder nicht eingetauchte Merkmal dieser oberen Oberfläche besonders zum Anfangszeitpunkt zu erfassen, indem sie insbesondere die unterschiedliche Reflexion des Lichts, wenn die obere Oberfläche eingetaucht ist und wenn sie nicht eingetaucht ist, berücksichtigen.

4. Kocher nach einem der vorstehenden Ansprüche, wobei der Kocher derart eingerichtet ist, dass die Messung einer für die Quellung des Nahrungsmittels repräsentative Größe durchgeführt wird, während die Temperatur im Behälter bei einer vordefinierten Temperatur gehalten wird, vorzugsweise höher oder gleich 70 °C für Reis, zum Beispiel gleich 75 °C, sogar höher, und insbesondere 95 °C erreichen kann.

5. Kocher nach einem der vorstehenden Ansprüche, der eingerichtet ist, um in Abhängigkeit von der Information einen an die Nahrungsmittelart angepassten hydrothermischen Zyklus auszuwählen oder dem Benutzer vorzuschlagen.

6. Kocher nach einem der Ansprüche 1 bis 5, der eingerichtet ist, um dem Benutzer zu erlauben, mindestens einen für das Nahrungsmittel angestrebten Texturparameter auszuwählen, insbesondere einen Festigkeits- und/oder Klebrigkeitsgrad am Ende eines Kochvorgangs, und wobei der Kocher ebenfalls eingerichtet ist, um ein Heizsystem des Behälters, der das Nahrungsmittel aufnimmt, mindestens in Abhängigkeit einerseits der mithilfe der Messmittel bestimmten Information und andererseits des oder der von dem Benutzer eingegebenen Texturparameter zu steuern, um sich bei Abschluss des Kochvorgangs an die von dem Benutzer gewünschte Textur anzunähern.

7. Kocher nach einem der vorstehenden Ansprüche, wobei die Messmittel auf einer optischen, akustischen, magnetischen, elektrischen und/oder elektromagnetischen Messung beruhen.

8. Kocher nach einem der vorstehenden Ansprüche, wobei die Messmittel konfiguriert sind, um die Messung der Quellrate oder der Quellgeschwindigkeit des Nahrungsmittels unmittelbar auf diesem auszuführen, indem sie eine Schwankung des Spiegels der Oberfläche des Nahrungsmittels im Verlauf des Einweichens erfassen.

9. Kocher nach einem der Ansprüche 1 bis 8, der konfiguriert ist, um die Messung der Quellrate oder der Quellgeschwindigkeit des Nahrungsmittels auszuführen, indem er ein durch das Nahrungsmittel im Verlauf des Einweichens aufgenommenes Volumen an Wasser bestimmt.

10. Kocher nach einem der vorstehenden Ansprüche, wobei die Messmittel ein Texturometer (60) umfassen.

11. Kocher nach einem der vorstehenden Ansprüche, der über eine Mensch-Maschine-Schnittstelle (110) verfügt, die einen Anzeiger umfasst, der erlaubt, mindestens eine mit der ausgeführten Messung verbundene Information einer Größe, die für die Quellrate repräsentativ ist, insbesondere die Reissorte, und vorzugsweise Parameter eines dem Benutzer in Abhängigkeit insbesondere von der identifizierten Sorte vorgeschlagenen hydrothermischen Zyklus, und gegebenenfalls von dem Benutzer eingegebene Präferenzen, insbesondere in Bezug auf die gewünschte Textur anzuzeigen.

12. Verfahren zum Messen einer Größe, die für die Quellkraft, die Quellrate oder die Quellgeschwindigkeit eines in einem Behälter eines Kochers vorhandenen Nahrungsmittels durch Wasseraufnahme repräsentativ ist, wobei während eines Einweichschrittes des Nahrungsmittels in diesem Behälter eine Quellkraft oder eine Schwankung des Nahrungsmittelspiegels oder des Einweichwassers im Behälter bestimmt wird und eine für die Rate oder die Geschwindigkeit repräsentative Information auf Grundlage mindestens einer so erfassten Schwankung bestimmt wird.

13. Verfahren nach Anspruch 12, wobei mindestens auf Grundlage der Information eine physikalisch-chemische Eigenschaft des Nahrungsmittels bestimmt wird, insbesondere die Amyloserate, der Proteingehalt, die Gelatinierungstemperatur und/oder eine geometrische Eigenschaft der Samen des Nahrungsmittels, insbesondere die Form und die Abmessungen.

14. Verfahren zum Kochen eines Nahrungsmittels mithilfe eines Kochers nach einem der Ansprüche 1 bis 11, wobei in Abhängigkeit mindestens der für die Quellkraft, die Quellgeschwindigkeit und/oder die Quellrate des Nahrungsmittels repräsentative Information ein Kochprogramm des Nahrungsmittels bestimmt wird und/oder dem Benutzer vorgeschlagen wird und/oder durch den Benutzer auswählbar gemacht wird, insbesondere durch Vergleich dieser Information mit Referenzinformationen, die erlauben, mindestens eine physikalisch-chemische Eigenschaft des Nahrungsmittels zu bestimmen, insbesondere die Amyloserate, den Proteingehalt und/oder die Gelatinierungstemperatur.

## Claims

1. Cooker (1) comprising a chamber for receiving (3) a food product (A) in grain form, in particular rice, having a propensity to swell in the presence of water, **characterised in that** it is provided with measuring means generating information relating to the swelling of the food product in the chamber during a soaking stage by absorption of water, particularly representative of the rate, ratio or force of swelling of the food product in the chamber.

2. Cooker according to claim 1, being arranged to detect an insufficient initial water intake, the measuring means being adapted to verify that the initial water level exceeds a the level of the food product by a predefined distance.

3. Cooker according to claim 2, comprising an element (10) to be placed on the food product to facilitate the detection of a water level greater than a predefined distance at the level of the food product, this element (10) following the level of the food during its swelling, and having an upper surface exceeding the level of the food product, the measuring means being arranged to detect the immersed (or not) character of this upper surface, in particular at the initial instant, in particular by playing on the different reflection of light when the upper surface is immersed and when it is not.

4. Cooker according to any one of the preceding claims, the cooker being arranged such that the measuring of a magnitude representative of the swelling of the food is taken, while the temperature in the chamber is maintained at a predefined temperature, preferably greater than or equal to 70°C for rice, for example equal to 75°C, even greater, which could reach, in particular, 95°C.

5. Cooker according to any one of the preceding claims, being arranged to select or propose to the user, according to said information, a hydrothermal cycle adapted to the variety of food product.

6. Cooker according to any one of claims 1 to 5, being arranged to permit the user to select at least one texture parameter sought for the food product, in particular a degree of firmness and/or stickiness at the end of cooking, and the cooker being arranged also to control a heating system of the chamber receiving the food product at least according, on the one hand, to said information determined using measuring means, and on the other hand, the texture parameters entered by the user, in order to get close at the end of cooking to the texture sought by the user.

7. Cooker according to any one of the preceding claims, the measuring means relying on an optical, acoustic, magnetic, electric and/or electromechanical measuring.

8. Cooker according to any one of the preceding claims, the measuring means being configured to take the measurement of the swelling rate or the swelling speed of the food product directly on it, by detecting a variation in level of the surface of the food product during soaking.

9. Cooker according to any one of claims 1 to 8, being configured to take the measurement of the swelling rate or the swelling speed of the food product by determining a water volume absorbed by the food product during soaking.

10. Cooker according to any one of the preceding claims, the measuring means comprising a texturometer (60).

11. Cooker according to any one of the preceding claims, having a man-machine interface (110) comprising a display unit which makes it possible to display at least one piece of information linked to the measurement taken of a magnitude representative of the swelling rate, in particular the rice variety, and preferably of the parameters of a hydrothermal cycle proposed to the user, according to, in particular, the identified variety, and if necessary, preferably entries by the user, in particular relating to the texture sought.

12. Method for measuring a magnitude representative of the swelling force, of the swelling rate or of the swelling speed of a food product present in a chamber of a cooker by absorption of water, wherein the food product in this chamber is detected during a soaking stage, a swelling force or a variation in level of the food product or of the soaking water in the chamber, and information representative of said rate or of said speed is determined based on at least the variation thus detected.

13. Method according to claim 12, wherein a physico-chemical property of the food product is determined, at least based on said information, in particular the amylose rate, the protein content, the gelatinisation temperature and/or a geometric characteristic of the grains of the food product, in particular the shape and the dimensions.

14. Method for cooking a food product using a cooker according to any one of claims 1 to 11, wherein a programme for cooking the food product is determined and/or proposed to the user and/or made selectable by the user according to at least said information representative of the swelling force, the swelling speed and/or the swelling rate of the food product, in particular by comparing this information with reference data making it possible to determine at least one physico-chemical property of the food product, in particular the amylose rate, the protein content and/or the gelatinisation temperature.
